**Europäisches Patentamt**

**European Patent Office**

**Office européen des brevets**

(11) Veröffentlichungsnummer: **0 327 824**
**A2**

(12) # EUROPÄISCHE PATENTANMELDUNG

(21) Anmeldenummer: **89100546.4**

(22) Anmeldetag: **13.01.89**

(51) Int. Cl.4: **G01D 1/14**

(30) Priorität: **02.02.88 DE 3803004**

(43) Veröffentlichungstag der Anmeldung:
**16.08.89 Patentblatt 89/33**

(84) Benannte Vertragsstaaten:
**AT BE CH DE ES FR GB GR IT LI LU NL SE**

(71) Anmelder: **Brunner, Wolfgang**
**brunner & zech Postfach 1143**
**D-7972 Isny im Allgäu(DE)**

Anmelder: **von Zech, Ludwig**
**brunner & zech&Postfach 1143**
**D-7972 Isny im Allgäu(DE)**

(72) Erfinder: **Brunner, Wolfgang**
**brunner & zech Postfach 1143**
**D-7972 Isny im Allgäu(DE)**
Erfinder: **von Zech, Ludwig**
**brunner & zech&Postfach 1143**
**D-7972 Isny im Allgäu(DE)**

(74) Vertreter: **Säger, Manfred, Dipl.-Ing.**
**Richard-Strauss-Strasse 56**
**D-8000 München 80(DE)**

(54) **Verfahren zur automatischen Speicherung von Druckverläufen an Druckverteilungsmessaufnehmern sowie Vorrichtung zur Durchführung des Verfahrens.**

(57) Zur automatischen und vollständigen Abspeicherung von Meßdaten von Druckverläufen an Druckverteilungsmeßaufnehmern (1), wird zunächst der Größte der sich durch Fertigungstoleranzen ergebenden unterschiedlichen Nullmeßwerte festgestellt, und einem Komparator als Referenzwert zugeführt. In der Meßphase werden die Meßdaten mit dem Referenzwert verglichen und fortlaufend in einen Halbleiterspeicher (6) eingelesen, wobei die den Speicherbereich überschreitenden Meßdaten verworfen werden.

Überschreitet der Meßwert mindestens eines Sensors den Referenzwert, so wird die Messung nach dem Einlesen einer begrenzten Datenmenge in den Halbleiterspeicher (6) gestoppt, wobei ein Restspeicherbereich, indem sich die Druckmeßdaten der Anfangsphase des Druckverlaufs befinden, nicht überschrieben wird.

Der sich im Halbleiterspeicher befindliche gesamte Druckverlauf, kann von einem Auswerterechner (7) bearbeitet werden. Zu Beginn der Meßphase wird nur ein Teilbereich des Druckverteilungsmeßaufnehmers (1) mit erhöhter Meßrate abgefragt.

## VERFAHREN ZUR AUTOMATISCHEN SPEICHERUNG VON DRUCKVERLÄUFEN AN DRUCKVERTEILUNGS-MESSAUFNEHMERN SOWIE VORRICHTUNG ZUR DURCHFÜHRUNG DES VERFAHRENS

Die Erfindung betrifft ein Verfahren zur selbsttätigen Speicherung von Druckverläufen an Druckverteilungsmeßaufnehmern, insbesondere der Anfangsphase eines Druckverlaufes, wobei der Druckverteilungsmeßaufnehmer eine Vielzahl von Drucksensoren mit unterschiedlichen Nullmeßwerten aufweist gemäß dem Oberbegriff des Hauptanspruches sowie eine Vorrichtung zur Durchführung des Verfahrens.

Es ist bekannt, seriell, z.B. zeilen- und/oder spaltenförmig angesteuerte Druckverteilungsmeßaufnehmer per Rechenprogramm permanent nach einem allfällig aufgebrachten Druck abzufragen (DE-OS 25 29 475) und nach der Feststellung eines Druckanstiegs für eine bestimmte Zeit mit maximaler Geschwindigkeit in einen Halbleiterspeicher einzulesen, von wo sie hinterher ausgewertet werden können.

Durch das per Rechner gesteuerte Abfragen der einzelnen Drucksensoren unter Überprüfung nach einer etwaigen Änderung des Meßwertes, ist wesentlich mehr Zeit erforderlich, als durch bloßes Abspeichern der Meßwerte in einem Halbleiterspeicher. Hierdurch kann ein Druckanstieg nur verlangsamt erkannt werden, wodurch die Meßwerte zu Beginn einer Druckbelastung nicht schnell genug aufgezeichnet werden können und somit verloren gehen.

Der Erfindung liegt die Aufgabe zugrunde, bei der automatischen Feststellung von Druckverteilungsmessungen mittels seriell arbeitender Druckverteilungsmeßaufnehmer bei hoher Meßgeschwindigkeit alle Pahsen des Druckverlaufs, insbesondere des Druckanstiegs zu Beginn der Druckverteilung von Beginn an zu erfassen.

Diese Aufgabe wird durch den Gegenstand der Ansprüche gelöst.

Nach der Erfindung werden zunächst in einem Meßdurchgang die in aller Regel verschiedenen Nullmeßwerte aller Drucksensoren eines Meßaufnehmers aufgenommen. Vorzugsweise wird nun der höchste Meßwert einem Komparator als Referenzwert übermittelt, weil die diesen Referenzwert übersteigenden Druckwerte einen kleineren Speicherbedarf erfordern, als wenn der Referenzwert tiefer läge. Danach werden nach der Nullwertmessung in einer Meßphase die Sensoren des Meßwertaufnehmers mit maximaler Geschwindigkeit permanent abgetastet, mit dem gespeicherten Referenzwert im Komparator verglichen und zugleich in einem Halbleiterspeicher eingelesen. Kommt hierbei ein Referenzwert von einem Drucksensor, welcher einen niedrigeren Maximalwert als der gespeicherte Referenzwert aufweist, so wird auch in dieser Phase zwar in den Speicher eingeschrieben, allerdings kann noch nicht objektiv festgestellt werden, daß ein Druckanstieg, z.B. durch das Aufsetzeneines Fusses auf die Druckverteilungsmeßaufnehmer der Meßplattform begonnen hat. Es wird erst dann bemerkt, wenn irgendein Meßwert auftritt, der höher als der gespeicherte höchste Referenzwert ist. Wenn dieser Augenblick festgestellt wird, so wird ein Zeitfenster geöffnet, innerhalb dessen die Werte weiterhin in den Halbleiterspeicher eingelesen werden. Danach wird das Einlesen von Werten in den Halbleiterspeicher unterbrochen. Nachdem nicht vorhergesehen werden kann, welcher Drucksensor zuerst belastet wird und die Drucksensoren, insbesondere bei den Nullwerten verschiedene Toleranzen aufweisen, muß eine gewisse Kraft aufgebracht werden, um den im Komparator gespeicherten höchsten Nullmeßwert zu erreichen. Hierdurch ergeben sich zeitliche Verzögerungen, was zur Folge hat, daß bereits vor Erreichen des Komparatorwertes echte Meßwerte in den Halbleiterspeicher eingelesen worden sind, weshalb die Kapazität des Halbleiterspeichers größer sein muß, als ein vorzugsweise ganzzahliges Vielfaches der Anzahl der Drucksensoren auf dem Meßaufnehmer.

Die mit der Erfindung erzielbaren Vorteile bestehen insbesondere darin, daß bei der automatischen Erfassung und Abspeicherung von Druckverteilungsabläufen über einen bestimmten Zeitraum hinweg alle Phasen, und zwar vom allerersten Beginn an mit größtmöglicher Meßrate erfaßt werden können. Hierdurch bedingt, bietet sich der Einsatz in der Medizin an, wobei die einzelnen Phasen eines Abrollvorganges des menschlichen Fusses vom Auftreffzeitpunkt auf eine Meßplattform an, vollständig und automatisch erfaßt werden können. Bei solchen Abrollvorgängen treten in der Regel sehr kurze Stoßimpulse beim Aufsetzen der Ferse auf die Meßplattform auf. Da der Auftrittpunkt der Ferse sich auf einen bestimmten Flächenbereich des Meßwertaufnehmers beschränkt, genügt es, zu Beginn nur diesen Flächenbereich abzufragen, wobei die Aufzeichnungsgeschwindigkkeit der Meßphase sich entsprechend erhöht und der erforderliche gesamte Speicherplatz im Halbleiterspeicher verringert wird.

Bei der Messung von Druckverteilungen müssen sehr große Datenmengen erfaßt werden, da die Meßaufnehmer bzw. Meßplattformen mehrere tausend Sensoren aufweisen können und bis zu mehreren hundert Mal pro Sek. abge fragt werden müssen. Einzelne Sensoren der Meßaufnehmer werden in der Regel nacheinander, zeilen- und spaltenförmig abgefragt, wobei eine hohe Meßrate nur dann erreicht werden kann, wenn die Meßwerte direkt in einen Halbleiterspeicher eingelesen werden.

Da nur ein begrenzter Speicherplatz zur Verfügung steht, ist es sinnvoll, mit dem Abspeichern erst dann zu beginnen, wenn tatsächlich ein Druck am Meßaufnehmer auftritt. Dies wird im Gegensatz zum Stand der Technik nicht dadurch bewirkt, daß bei jedem einzelnen Sensor nach der Messung der Meßwert durch einen Rechner überprüft wird, sondern zunächst einmal eingespeichert wird und zwar fortlaufend in einem vorzugsweise als Schieberegister wirkenden Halbleiterspeicher. Da, wie eingangs schon erwähnt, die einzelnen Sensoren durch Fertigungstoleranzen unterschiedliche Nullmeßwerte und Kennlinien aufweisen, ist es auch nicht möglich, mit einem einzigen elektronischen Komparator die Meßwerte laufend mit den Nullmeßwerten zu vergleichen und den Abspeichervorgang zu starten. Vielmehr müßte jedem einzelnen Sensor der Meßmatrix ein Komparator zugeordnet sein, was zu einem sehr hohen technischen Aufwand führen würde.

Bei der erfindungsgemäßen Vorrichtung werden zunächst in einem Meßdurchgang die Nullmeßwerte aller Drucksensoren eines Meßaufnehmers aufgenommen. Vorzugsweise wird nun der höchste Meßwert einem Komparator als Referenzwert übermittelt. Danach werden die Drucksensoren des Meßwertaufnehmers mit maximaler Geschwindigkeit permanent abgetastet, mit dem Referenzwert des Komparators verglichen und in den Halbleiterspeicher eingelesen. Ist der Speicher voll, so werden alte Meßwerte permanent verworfen.

Ist beispielsweise ein Meßwert größer als der Referenz wert, wobei zum Referenzwert noch ein Sicherheitsabstand hinzugenommen werden kann, so wird in einer bevorzugten Ausführung der Zeitpunkt (t) oder die zugehörige Speicheradresse festgehalten und danach nur noch eine begrenzte Anzahl von Meßwerten eingelesen. Dies wird durch eine Zeitverzögerungsschaltung bewirkt. Danach wird die Messung angehalten. Es werden also nur so viele Meßwerte in den Speicher eingelesen, daß genügend Speicherplatz freibleibt, welcher die Meßwerte vor dem Zeitpunkt (t) und damit die Anfangsphase des Druckverlaufes beinhaltet. Dieser freibleibende Restspeicherplatz kann entsprechen. Als Referenzwerte des Komparators kann theoretisch auch ein etwas niedrigerer Wert als der Maximalwert der Nullmeßwerte verwendet werden, jedoch darf dieser höchstens so groß sein, wie dieser Maximalwert. Bei niedrigeren Referenzwerten erhöht sich jedoch der Speicherbedarf des Halbleiterspeichers gegebenenfalls beträchtlich.

Beim Abrollvorgang des menschlichen Fußes kann davon ausgegangen werden, daß die Ferse zunächst auf den vorderen Bereich einer Druckverteilungsmeßwertes aufgesetzt wird. Bei einer sinnvollen Länge der Meßfläche von z.B. 0,5 m genügt es daher, zunächst nur die Hälfte der Meßfläche abzufragen. Dies würde z.B. ein um das doppelt erhöhte Meßrate ergeben. Da in der Regel beim Auftreffen der Ferse kurze Druckimpulse bestehen, ist diese hohe Meßrate für eine genaue Analyse vorteilhaft. Wird am Komparator der maximale Nullwert der Meßspannung überschritten, so kann nach einer zusätzlichen Zeitverzögerung die Umschreibung zum Abfragen des gesamten Druckverteilungsmeßaufnehmers erfolgen.

Weitere zweckmäßige Ausgestaltungen und Weiterbildungen der Erfindung sind in den Unteransprüchen gekennzeichnet.

Das Prinzipschaltbild weist einen Druckverteilungsmeßaufnehmer 1 auf, der die einzelnen spalten- und zeilenförmig nach einer Matrix angeordneten Druckaufnehmer aufweist, welche seriell zeilen- und spaltenförmig angesteuert und abgefragt werden.

Mit dem Schalter S wird von einer Nullwertmessung (Stellung 1) zur Meßphase (Stellung 2) nach Bedarf umgeschaltet. Bei der Nullwertmessung wird vorzugsweise mit einem Rechner 2 eine Maximalwertbestimmung vorgenommen. Der maximale Nullwertmeßwert wird einem Komparator 3 als Referenzwert übermittelt. In der Meßphase wird jeder Druckmeßwert im Komparator 3 mit dem Referenzwert verglichen und einen Halbleiterspeicher 6 eingelesen. Übersteigt der Meßwert den Maximalwert $U_{max}$, so wird über eine Zeitverzögerung 4 der Abspeichervorgang gestoppt. Dies kann beispielsweise dadurch geschehen, daß der Adresszähler 5 des Halbleiterspeichers 6 angehalten wird. Das Zeitverzögerungsglied 4 kann auch aus einem Zähler bestehen, der eine bestimmte Menge von abgefragten Sensoren abzählt und dann den Speichervorgang anhält. Nach dem Abspeichern können die Meßdaten aus dem Speicher 6 ausgelesen und mit einem weiteren Rechner 7 ausgewertet werden.

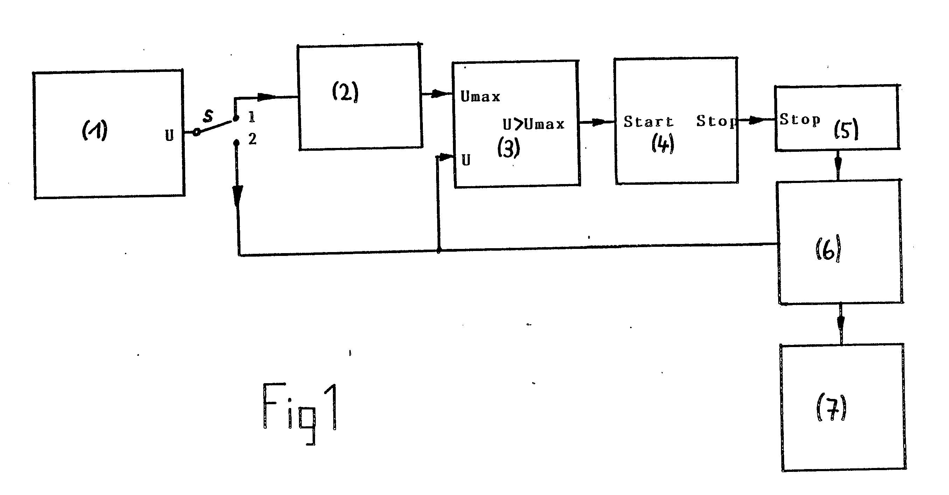

## Ansprüche

1. Verfahren zum selbsttätigen Speichern einer begrenzten Anzahl (N) von einzelnen ortsaufgelösten Meßwerte von vorzugsweise matrixartig angeordneten Drucksensoren eines Druckverteilungs-Meßaufnehmers, vorzugsweise Meßplattform, während des Verlaufes des sich ändernden Druckes, insbesondere der Anfangsphase eines Drucksverlaufes, wobei die Vielzahl der einzelnen Drucksensoren durch Fertigungstoleranzen unterschiedliche Nullmeßwerte aufweisen, mit folgenden Merkmalen:

a) vor einer Meßphase wird im Rahmen einer Nullwertmessung der Nullmeßwert (U) jedes einzelnen Drucksensors eines Druckverteilungsmeßaufnehmers (1) aufgenommen, der höchste Wert (Umax) festgestellt und als Referenzwert in einem Komperator (3) abgespeichert;

b) in der Meßphase werden die Druckaufnehmer dauernd abgefragt und die Meßwerte (U) werden permanent in einen Halbleiterspeicher (6) eingelesen, wobei die den vorhandenen Speicherplatz überschreitenden Werte fortlaufend verworfen werden;

c) die in der Meßphase anfallenden Meßwerte (U) werden fortlaufend in dem Komperator (3) mit dem größten Nullmeßwert (Umax) verglichen;

d) überschreitet einer der Meßwerte (U) den größten Nullmeßwert (Umax), so werden nur noch eine begrenzte Zeit eine begrenzte Anzahl (N) von Druckmeßdaten in den Halbleiterspeicher (6) eingelesen.

2. Verfahren nach Anspruch 1, dadurch gekennzeichnet, daß die begrenzte Menge (N) von Druckmeßdaten kleiner ist als die Kapazität des Halbleiterspeichers (6) und daß die begrenzte Menge (N) von Druckmeßdaten einem ganzzahligem Vielfachen der Anzahl der Drucksensoren auf dem Meßaufnehmer entspricht.

3. Verfahren nach Anspruch 1 oder 2, dadurch gekennzeichnet, daß zu Beginn einer Meßphase nur ein Teilgebiet des Druckverteilungs-Meßaufnehmers (1) abgefragt wird.

4. Verfahren nach einem der Ansprüche 1 bis 3, dadurch gekennzeichnet. daß erst nach Überschreitung des größten Nullmeßwertes (Umax) durch mindestens einen der Meßwerte (U) und nach einer zusätzlichen Zeitverzögerung der Gesamtdruckverteilungsmeßaufnehmer abgefragt wird.

5. Verfahren nach einem der Ansprüche 1 bis 4, dadurch gekennzeichnet, daß das Teilgebiet des Druckverteilungs-Meßaufnehmers (1) in etwa der Hälfte einer der Länge nach halbierten Druckmeßfläche eines Druckverteilungs-Meßaufnehmers (1) entspricht.

6. Vorrichtung, insbesondere zur Durchführung des Verfahrens nach einem der Ansprüche 1 bis 5 mit einem Druckverteilungs-Meßaufnehmer (1) sowie einem Halbleiterspeicher (6) zur Verarbeitung der in dem Halbleiterspeicher gespeicherten Daten dienender Rechner (7) vorgesehen ist, dadurch gekennzeichnet, daß hinter dem Druckverteilungs-Meßaufnehmer (1) ein Umschalter (S) angeordnet ist, dessen einer Ausgang (2) direkt mit dem Halbleiterspeicher (6) und dessen anderer Ausgang (1) mit einem weiteren Rechner (2) zur Ermittlung des maximalen Nullmeßwertes versehen ist, dessen Ausgang an dem einen Eingang eines Komperators (3) angeschlossen ist, dessen anderer Eingang mit dem Ausgang (2) des Umschalters (S) verbunden ist, wobei der Ausgang des Komperators (3) ein Zeitglied (4) anwirft, dessen Ausgang auf den Halbleiterspeicher (6) zum Zwecke des Anhaltens des Speichern einwirkt.

7. Vorrichtung nach Anspruch 6, dadurch gekennzeichnet, daß der Ausgang des Zeitgliedes (4) den Adresszähler (5) des Halbleiterspeichers (6) anhält.

EP 0 327 824 A2

(1)

U

**S**

1
2

(2)

Umax

U>Umax

U

(3)

Start    Stop

(4)

Stop

(5)

(6)

(7)

Fig1